# EUROPEAN PATENT APPLICATION

(11) **EP 4 246 403 A1**
(43) Date of publication of application: **20.09.2023**
(21) Application number: 23160198.0
(22) Date of filing: 06.03.2023
(51) Int. Cl.: G06Q 20/02, G06Q 30/016

(54) **METHOD AND APPARATUS FOR FACILITATING PROVISION OF INSTANT CREDIT TO CUSTOMERS VIA RAPID AND MACHINE LEARNING SUPPORTED UNDERWRITING DECISIONS**

(30) Priority: 18.03.2022 US 202217698463
(71) Applicant: Affirm, Inc., San Francisco, CA 94108 (US)
(72) Inventor: ZARAGOZA, Mark, North Tustin, 92705 (US); NOUSHAHR, Hossein, San Francisco,, 94108 (US); ALVAREZ, Pablo, San Francisco,, 94108 (US); FORT, Enric, San Francisco, 94108 (US); LIU, Oliver, San Francisco, 94109 (US); VILAR, Eduardo, San Rafael, 94903 (US)
(74) Representative: Piotrowicz, Pawel Jan Andrzej

(57) **Abstract**

A method of facilitating a product return transaction may include receiving product return data from a merchant indicating merchant-specific information on product returns to the merchant and receiving an indication of a product return request from a customer. The method may further include employing a trained model to determine a likelihood of return rating associated with physical receipt of a returned product associated with the product return request based on the product return data, responsive to the likelihood of return rating exceeding a threshold, extending a credit to the customer based on a value of the returned product, and enabling the customer to initiate a product repurchase using the credit.

## Description

### TECHNICAL FIELD

Example embodiments generally relate to financial industry technologies and, in particular, relate to apparatuses, systems, and methods for facilitating commerce by enabling product returns to be conducted with instant credit extension to qualified customers.

### BACKGROUND

The financial industry is comprised of many thousands of customers, vendors, lenders, borrowers, and other bit players that all interact in various ways to enable customers to ultimately have access to goods and services provided by vendors. Credit and debit transactions have long been a way that individuals have managed point of sale transactions to ensure seamless transfer of funds from customers, or on their behalf, to vendors for relatively routine or small transactions. These transactions support individual sales, and help customers obtain products, and vendors sell products, while providing an ample source of data regarding the transactions involved.

That said, at least some of those transactions inevitably result in returned products. The return of products creates an interruption to cash flow for vendors since funds provided to cover a transaction may need to be refunded. If a refund is issued, the customer may not spend the refund at the same vendor, and therefore sales may be lost. Moreover, the return itself imposes a cost for processing on the vendor. As such, vendors often prefer to provide a voucher or credit to the customer, and certain companies have even evolved into a space where return processing is offered as a service to vendors.

The returns as a service space is relatively new, and continues to develop. Along with such development, there is fertile ground for innovative ideas regarding how to improve the efficiency and effectiveness of the service. Example embodiments explore technical means by which to improve efficiency and effectiveness in relation to some specific aspects of this space.

### BRIEF SUMMARY OF SOME EXAMPLES

Accordingly, some example embodiments may enable the provision of technical means by which to give vendors or merchants the ability to secure repurchase opportunities without waiting for physical return of a product that is being returned. By employing machine learning techniques to ensure that conditions are positive for a third party to take the risk of the physical product being returned, that third party can issue instant credit to the customer, which can be used for immediate repurchase. Vendors or merchants may therefore ship the repurchased product based on the third party's provision of funds via the instant credit, and then the third party gets payment when the returned product is physically returned. This can be a vital tool for driving commerce directly connected to product returns, and is also only possible with technical assistance to coordinate the activities of the parties when signaling analyzed using machine learning suggests that it is safe for the third party to facilitate the transaction.

In an example embodiment, a method of facilitating a product return transaction may be provided. The method may include receiving product return data from a merchant indicating merchant-specific information on product returns to the merchant and receiving an indication of a product return request from a customer. The method may further include employing a trained model to determine a likelihood of return rating associated with physical receipt of a returned product associated with the product return request based on the product return data, responsive to the likelihood of return rating exceeding a threshold, extending a credit to the customer based on a value of the returned product, and enabling the customer to initiate a product repurchase using the credit.

In another example embodiment, an apparatus for facilitating a product return transaction may be provided. The apparatus may include processing circuitry configured for receiving product return data from a merchant indicating merchant-specific information on product returns to the merchant and receiving an indication of a product return request from a customer. The processing circuitry may be further configured for employing a trained model to determine a likelihood of return rating associated with physical receipt of a returned product associated with the product return request based on the product return data, responsive to the likelihood of return rating exceeding a threshold, extending a credit to the customer based on a value of the returned product, and enabling the customer to initiate a product repurchase using the credit.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 illustrates a functional block diagram of a system for providing a return facilitation platform according to an example embodiment;
FIG. 2 illustrates a functional block diagram of an apparatus for defining a facilitation agent according to an example embodiment;
FIG. 3 illustrates a block diagram showing control flow for determining whether to offer instant cash to a customer in association with a product return in accordance with an example embodiment;
FIG. 4 illustrates a block diagram for continued control flow from the processes shown in FIG. 3;
FIG. 5 is a schematic block diagram for a machine learning module in accordance with an example embodiment;
FIG. 6 is a sample interface page associated with operation of the return facilitation platform according to an example embodiment; and
FIG. 7 illustrates a block diagram of a method of evaluating whether to issue instant credit for a customer to use for a repurchase prior to actual return of a returned product in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection of components that are operably coupled to each other. Additionally, when the term "data" is used, it should be appreciated that the data may in some cases include simply data or a particular type of data generated based on operation of algorithms and computational services, or, in some cases, the data may actually provide computations, results, algorithms and/or the like that are provided as services.

As used in herein, the term "module" is intended to include a computer-related entity, such as but not limited to hardware, firmware, or a combination of hardware and software (i.e., hardware being configured in a particular way by software being executed thereon). For example, a module may be, but is not limited to being, a process running on a processor, a processor (or processors), an object, an executable, a thread of execution, and/or a computer. By way of example, both an application running on a computing device and/or the computing device can be a module. One or more modules can reside within a process and/or thread of execution and a module may be localized on one computer and/or distributed between two or more computers. In addition, these components can execute from various computer readable media having various data structures stored thereon. The modules may communicate by way of local and/or remote processes such as in accordance with a signal having one or more data packets, such as data from one module interacting with another module in a local system, distributed system, and/or across a network such as the Internet with other systems by way of the signal. Each respective module may perform one or more functions that will be described in greater detail herein. However, it should be appreciated that although this example is described in terms of separate modules corresponding to various functions performed, some examples may not necessarily utilize modular architectures for employment of the respective different functions. Thus, for example, code may be shared between different modules, or the processing circuitry itself may be configured to perform all of the functions described as being associated with the modules described herein. Furthermore, in the context of this disclosure, the term "module" should not be understood as a nonce word to identify any generic means for performing functionalities of the respective modules. Instead, the term "module" should be understood to be a modular component that is specifically configured in, or can be operably coupled to, the processing circuitry to modify the behavior and/or capability of the processing circuitry based on the hardware and/or software that is added to or otherwise operably coupled to the processing circuitry to configure the processing circuitry accordingly.

Some example embodiments described herein provide for a data processing platform that can be instantiated at an apparatus comprising configurable processing circuitry. The processing circuitry may be configured to execute various processing functions on financial data using the techniques described herein. The data processing platform may, for example, be configured to provide an information exchange via which multiple independent or even proprietary platforms may be connected to each other. In particular, the data platform may monitor various types of signals (i.e., data inputs) that are indicative of different activities, particularly associated with the return of merchandise by customers to the vendors or merchants from which the merchandise was originally purchased. On the basis of the various signals that are monitored, a third party providing services associated with product returns may facilitate certain transactions for a given merchant and customer. In this regard, in general terms the third party may be seen as a facilitator or provider of services associated with the return process. In some embodiments, the facilitator may extend credit to a customer instantly (e.g., instant credit) when a product return is initiated to permit the customer to conduct an immediate repurchase of other goods using the instant credit even before the product associated with the product return is physically returned and received by the merchant. In effect, the facilitator takes on the risk of the product return actually being completed. However, rather than simply being a risk calculation or a shifting of responsibilities or promises, example embodiments provide a technical platform that enables the return of one product and repurchase of another. The existence of risk calculations and alignments of responsibilities are merely factors within the technical paradigm that is used to drive sales, specifically repurchases and in some cases upsells (e.g., repurchases where the value of goods involved in the repurchase is greater than the value of goods involved in the return process).

As such, the data processing platform may be embodied as a return facilitation platform that connects customers and merchants (or vendors) to banks, payment services, and a transaction facilitator within the financial industry. By enabling data between the players on or members of the platform to be shared, and by further providing vendors and customers with tools for using the platform to access a funds that may drive repurchasing, the customers may be enabled to obtain products they desire in a timely fashion, while merchants shift the risk of actually receiving the product being returned to a third party that is happy to assume that risk to increase the speed of transactions and generate commerce that may otherwise not happen at all, or at least be delayed otherwise. The platform may be employed under the management of the facilitator to control the usage of data on mutually agreeable terms for all participants who access the platform. Accordingly, a commercial framework can be provided by a technical platform designed to connect merchants and customers with access to financial support to keep products moving in commerce even in the presence of return activity of some amount of the products sold. In other words, instead of merely initiating a platform for supporting money transfers for individual transactions, example embodiments provide merchants with technical means by which to manage returns in a way that maximizes customer satisfaction, may improve repurchase volume, and also does not increase the merchant's risk profile substantially while driving repurchases without waiting for the dust to settle on past transactions involving returns. This stands in contrast to today's paradigm in which merchants would normally not give a customer credit (or a voucher) to make further purchases until a returned product is physically received or, if credit is provided, the merchants (or a third party) must require the customer to qualify for a short term loan to cover the value of the returned product. The creation of one platform, managed by the facilitator, for the interaction of multiple parties to enable merchants to access a funds associated with repurchase activity before receiving the products being returned provides a flexible and yet cohesive experience for merchants that maximizes responsible access to financial freedom and satisfaction for both merchants and customers.

Example embodiments therefore do not relate to the legal responsibilities associated with establishing a loan or a lending relationship. Moreover, example embodiments do not merely relate to the calculation of risk used to determine whether to grant a loan to a vendor. Instead, example embodiments relate to a technical means by which to determine whether the facilitator can advance credit to the customer before the product is returned to allow the customer to shop and repurchase or even upsell to drive commerce without the merchant returning funds to the customer first when the product is physically returned. In effect, the facilitator performs a "soft credit check" on the situation to determine, without actually doing any literal credit check, whether to advance credit to cover a repurchase transaction before the physical product is returned. Example embodiments may, in some cases, further facilitate the transfer of funds to the customer (or merchant at which the customer spends credit advanced), and manage the return activity and repayment aspects that complete the full scope of the transactions involved.

Example embodiments not only provide the return facilitation platform, but also provide various enabling technologies that may facilitate operation of the return facilitation platform itself or of modules that may interact with the return facilitation platform. Example embodiments may also provide for enhancement of functionalities associated with the environment that is created by the return facilitation platform. The return facilitation platform may provide a mechanism by which to enhance commerce in a responsible way that is both empathetic and empowering to vendors/merchants.

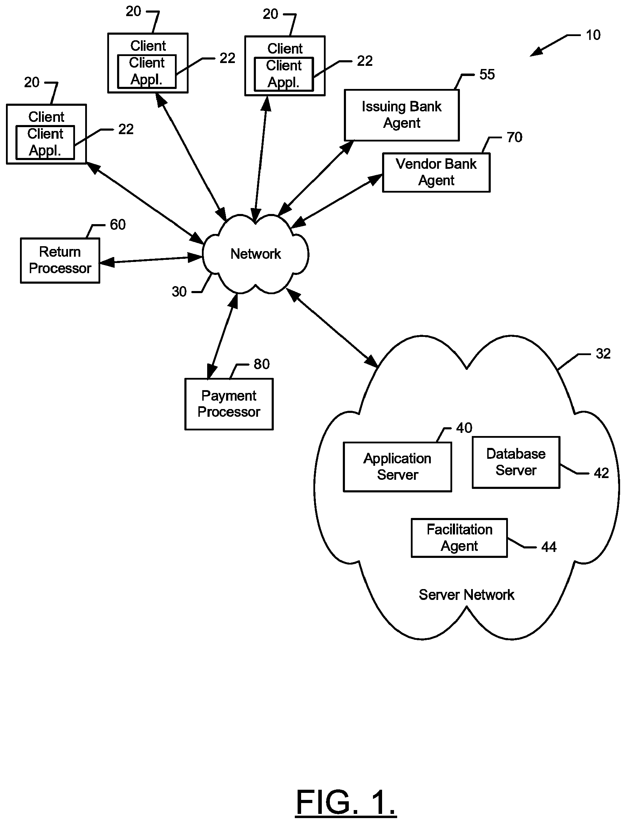

An example embodiment of the invention will now be described in reference to FIG. 1, which illustrates an example system in which an embodiment of the present invention may be employed. As shown in FIG. 1, a system comprising a return facilitation platform 10 according to an example embodiment may include one or more client devices (e.g., clients 20). Notably, although FIG. 1 illustrates three clients 20, it should be appreciated that a single client or many more clients 20 may be included in some embodiments and thus, the three clients 20 of FIG. 1 are simply used to illustrate a potential for a multiplicity of clients 20 and the number of clients 20 is in no way limiting to other example embodiments. In this regard, example embodiments are scalable to inclusion of any number of clients 20 being tied into the system 10. Furthermore, in some cases, some embodiments may be practiced on a single client without any connection to the system 10.

The clients 20 may, in some cases, each be associated with a single individual/customer or vendor/merchant. However, in some embodiments, one or more of the clients 20 may be associated with an organization (e.g., a company) or group of individuals (e.g., a business unit). In general, the clients 20 may be referred to as members of the environment or community associated with the return facilitation platform 10.

Each one of the clients 20 may include one or more instances of a communication device such as, for example, a computing device (e.g., a computer, a server, a network access terminal, a personal digital assistant (PDA), radio equipment, cellular phone, smart phone, or the like) capable of communication with a network 30. As such, for example, each one of the clients 20 may include (or otherwise have access to) memory for storing instructions or applications for the performance of various functions and a corresponding processor for executing stored instructions or applications. Each one of the clients 20 may also include software and/or corresponding hardware for enabling the performance of the respective functions of the clients 20 as described below. In an example embodiment, the clients 20 may include or be capable of executing a client application 22 configured to operate in accordance with an example embodiment of the present invention. In this regard, for example, the client application 22 may include software for enabling a respective one of the clients 20 to communicate with the network 30 for requesting and/or receiving information and/or services via the network 30 as described herein. The information or services receivable at the client applications 22 may include deliverable components (e.g., downloadable software to configure the clients 20, or information for consumption/processing at the clients 20). As such, for example, the client application 22 may include corresponding executable instructions for configuring the client 20 to provide corresponding functionalities for sharing, processing and/or utilizing financial data as described in greater detail below.

The network 30 may be a data network, such as one or more instances of a local area network (LAN), a metropolitan area network (MAN), a wide area network (WAN) (e.g., the Internet), and/or the like, which may couple the clients 20 to devices such as processing elements (e.g., personal computers, server computers or the like) and/or databases. Communication between the network 30, the clients 20 and the devices or databases (e.g., servers) to which the clients 20 are coupled may be accomplished by either wireline or wireless communication mechanisms and corresponding communication protocols.

In an example embodiment, devices to which the clients 20 may be coupled via the network 30 may include one or more application servers (e.g., application server 40), and/or a database server 42, which together may form respective elements of a server network 32. Although the application server 40 and the database server 42 are each referred to as "servers," this does not necessarily imply that they are embodied on separate servers or devices. As such, for example, a single server or device may include both entities and the database server 42 could merely be represented by a database or group of databases physically located on the same server or device as the application server 40. The application server 40 and the database server 42 may each include hardware and/or software for configuring the application server 40 and the database server 42, respectively, to perform various functions. As such, for example, the application server 40 may include processing logic and memory enabling the application server 40 to access and/or execute stored computer readable instructions for performing various functions. In an example embodiment, one function that may be provided by the application server 40 may be the provision of access to information and/or services related to the return facilitation platform 10, and more particularly relating to coordinating provision of a credit to a customer (i.e., associated with one of the clients 20) based on a soft credit check and estimation of the likelihood or receiving the returned product as described herein. For example, the application server 40 may be configured to provide for storage of information descriptive of events or activities associated with the return facilitation platform 10 and the execution of a determination of a credit decision for instant credit offered to a customer before a product is physically returned, thereby freeing the vendor from all risk (and in some cases also processing responsibility) associated with the return activity itself, while enabling the customer to use the instant credit to conduct a repurchase with the vendor. In some cases, data and/or services may be exchanged amongst members, where specific needs or desires of the members are aligned with respect to playing their respective roles in connection with conducting financial transactions, and enabling signaling associated with the volume of returns associated with such transactions to serve as a basis for conducting what is effectively a soft credit check enabling the customer to access funds in the form of an instant credit that can be spent by the customer prior to actual physical return of a returned product.

In some embodiments, for example, the application server 40 may therefore include an instance of a facilitation agent 44 comprising stored instructions for handling activities associated with practicing example embodiments as described herein. The facilitation agent 44 may be a technical device, component or module affiliated with the facilitator of the functioning of the return facilitation platform 10. Thus, the facilitation agent 44 may operate under control of the facilitator to be a technical means by which to carry out activities under direction of the facilitator or employees thereof. As such, in some embodiments, the clients 20 may access the return facilitation platform 10 services, and more particularly contact the facilitation agent 44 online and utilize the services provided thereby. However, it should be appreciated that in other embodiments, an application (e.g., the client application 22) enabling the clients 20 to interact with the facilitation agent 44 (or components thereof) may be provided from the application server 40 (e.g., via download over the network 30) to one or more of the clients 20 to enable recipient clients to instantiate an instance of the client application 22 for local operation such that the facilitation agent 44 may be a distributor of software enabling members or parties to participate in operation of the return facilitation platform 10. Alternatively, another distributor of the software may provide the client 20 with the client application 22, and the facilitation agent 44 may communicate with the client 20 (via the client application 22) after such download.

In an example embodiment, the client application 22 may therefore include application programming interfaces (APIs) and other web interfaces to enable the client 20 to conduct business via the return facilitation platform 10. The client application 22 may include a series of control consoles or web pages including a landing page, onboarding services, activity feed, account settings (e.g., customer or merchant profile information), transaction management services, payment management services and the like in cooperation with a service application that may be executed at the facilitation agent 44. Thus, for example, the client application 22 may enable the merchant or customer to submit profile information, request access to the platform to create an account, review monthly statements, access or adjust information associated with the created account, or receive help or other information. Budgeting tools and other useful information and other useful tools for managing the finances of the customer or merchant may also be available via the client application 22 in some cases.

In an example embodiment, the application server 40 may include or have access to memory (e.g., internal memory or the database server 42) for storing instructions or applications for the performance of various functions and a corresponding processor for executing stored instructions or applications. For example, the memory may store an instance of the facilitation agent 44 configured to operate in accordance with an example embodiment of the present invention. In this regard, for example, the facilitation agent 44 may include software for enabling the application server 40 to communicate with the network 30 and/or the clients 20 for the provision and/or receipt of information associated with performing activities as described herein. Moreover, in some embodiments, the application server 40 may include or otherwise be in communication with an access terminal (e.g., a computer including a user interface) via which individual operators or managers of the entity associated with the facilitation agent may interact with, configure or otherwise maintain the return facilitation platform 10 and/or the facilitation agent 44.

As such, the environment of FIG. 1 illustrates an example in which provision of content and information associated with the financial industry (e.g., including at least some data provided to/from customers and/or vendors in real-time) may be accomplished by a particular entity (namely the facilitation agent 44 residing at the application server 40). Thus, the facilitation agent 44 may be configured to handle provision of content and information associated with tasks that are associated only with the return facilitation platform 10. Access to the facilitation agent 44 may therefore be secured as appropriate for the individuals or organizations involved and credentials of individuals or organizations attempting to utilize the tools provided herein may be managed by digital rights management services or other authentication and security services or protocols that are outside the scope of this disclosure.

In some cases, the facilitation agent 44 may be utilized to evaluate an individual product return process initiated by a customer with a product from a given merchant to determine whether instant credit can be granted to the customer before the product is actually physically returned. The instant credit may be spent online immediately, or a voucher may be issued for later shopping either specifically with the merchant, or with other qualifying merchants. However, other embodiments may not include such a voucher, but other modes of transferring money or credit to the qualifying merchants. The return facilitation platform 10 may therefore include or communicate with other actors, entities or organizations to support various ways of transferring money or credit, and FIG. 1 reflects some of those actors, entities or organizations. In this regard, the return facilitation platform 10 may also operate in cooperation with a bank authentication agent 50, an issuing bank agent 55, a return processor 60, a vendor bank agent 70, and a payment processor 80. The facilitation agent 44 may be configured to interact with, or otherwise facilitate interactions between, each of the bank authentication agent 50, the issuing bank agent 55, the return processor 60, the vendor bank agent 70, and the payment processor 80 in order to carry out example embodiments as described herein. Thus, each of the bank authentication agent 50, the issuing bank agent 55, the return processor 60, the vendor bank agent 70, and the payment processor 80 should be understood to be a computer, server, smart phone, or other technical component or module associated with a respective party (e.g., an authenticating bank, issuing bank, a vendor return processor, a customer bank, and a payment service, respectively) that is capable of communication with other parties via the network 30, and under control of or responsive to facilitating communication by the facilitation agent 44.

The issuing bank may be a bank or other financial services provider. The issuing bank may have a persistent relationship with the entity associated with the facilitation agent 44 (e.g., the facilitator), but generally need not have any persistent or pre-existing relationship with the vendor or the vendor bank. The issuing bank may be contracted with or otherwise have a pre-existing relationship with the facilitation agent 44 (and entity associated therewith) that enables the facilitation agent 44 to facilitate transactions on behalf of the vendor when certain conditions (agreed upon in advance by the entity associated with the facilitation agent 44 and the issuing bank) are met associated with a transaction undertaken (or attempted) by the vendor or customers of the vendor via the client 20 and client application 22. For example, the issuing bank may be the issuer of a loan or credit extension on behalf of the facilitation agent 44 and be responsible for directly paying the merchants and vendors the amount of money that is approved by the facilitation agent 44 as a credit to the customer for spending at the merchants and vendors.

The bank authenticator may be an agent or financial service provider capable of granting the facilitation agent 44 access to the vendor bank to view account balances and credentials. The balances and credentials may be used or relied upon to pull or push funds from or to the vendor bank using the payment processor 80. Thus, for example, the bank authenticator may utilize its own software, application programming interfaces (APIs) or the like that define an infrastructure or intermediary platform to connect a vendor's bank account with the facilitation agent 44.

The vendor bank may be a bank at which the vendor (i.e., associated with one of the clients 20) deposits money in a bank account such as a savings account or a checking account. In an example embodiment, the vendor may subscribe or register to a service or request access to services from the facilitation agent 44 to enroll the vendor as a member of the return facilitation platform 10. During subscription or registration, the vendor may be prompted (via the client 20 and client application 22) by the facilitation agent 44 to provide account details identifying the savings account or checking account (i.e., a vendor account) at the vendor bank. The vendor may, by registering or subscribing, further authorize the facilitation agent 44 to conduct specific activities related to the vendor account when corresponding conditions are met, which may be facilitated by one of or a combination of the bank authenticator and the issuing bank as described above. The activities may include checking account status (i.e., checking a current balance of funds deposited in the vendor account) and/or authorizing withdrawal of funds from the vendor account by the payment processor 80 (e.g., when a physical product is ultimately returned) in order to make payments to the facilitation agent 44 or insertion of funds into the vendor account (e.g., when repurchases are made prior to return of the product) using instant credit granted to a customer for repurchase in connection with a product return.

The payment processor 80 may be an agent or service that facilitates the acceptance and/or sending of payments between parties online. Thus, for example, the payment processor 80 may utilize its own software, application programming interfaces (APIs) or the like that define an infrastructure or payment platform to connect businesses or companies to manage their businesses or transactions online. The payment processor 80 may therefore be used to transfer money between parties or entities as described herein.

The vendor bank agent 70 may change for each respective one of the clients 20 (and therefore for each respective vendor). Similarly, the vendor bank agent 70 may change for each respective transaction since different vendors may be involved in different transactions involving the clients 20. In some examples, the bank authentication agent 50 and the payment processor 80 may remain the same entities across all transactions managed by the facilitation agent 44. However, the facilitation agent 44 could use different bank authentication agents in different geographic areas or jurisdictions, and the payment processor 80 may also change on the same bases. In some cases, the facilitation agent 44 may use different bank authentication agents 50 in order to ensure all vendors' banks can be accommodated. For example, if the vendor bank was not serviced by a first bank authentication agent, the facilitation agent 44 is configured to swap in a second bank authentication agent that would allow for servicing of the vendor bank. Accordingly, the facilitation agent 44 is configured to swap each of the payment processors 80 and the bank authentication agents 50 under certain circumstances. For example, the bank authentication agent 50 may be swapped by the facilitation agent 44 if the bank authentication agent 50 is temporarily offline or if the bank authentication agent 50 did not support a customer bank.

As noted above, the return facilitation platform 10 may operate to enable the customer associated with a given one of the clients 20 to receive a credit (or instant credit) for the value of a returned product when the facilitation agent 44 determines that such credit is warranted based on information associated with returns for the corresponding vendor or merchant. In some example embodiments, the client application 22 may be used in connection with setting up the account details that are then used as the basis for managing interactions between the parties shown in FIG. 1 under control of the facilitation agent 44. In this regard, for example, the client application 22 may be used to engage (e.g., via a website and corresponding APIs) with the facilitation agent 44 to set up an account with the facilitation agent 44 for services associated with the return facilitation platform 10. The facilitation agent 44 may prompt the client 20 to provide account details associated with the vendor bank agent 70 and may provide terms and conditions (electronically or via mail or other communication means) that the vendor may accept to establish a vendor profile and vendor account with the facilitation agent 44. Thus, it should be appreciated that the client application 22 could be used to set up the vendor account and vendor profile and/or to conduct individual transactions (i.e., individual requests for a merchant cash advance, or individual acceptance of a merchant cash advance offer initiated by the facilitation agent 44), or do the same for customers.

During establishment of the vendor account, the vendor may provide an identification of the vendor bank associated with the vendor bank agent 70, and may also provide details for the savings or checking account that the vendor maintains at the vendor bank. The vendor may also authorize the facilitation agent 44 to make real time (or anytime) checks on account status (e.g., account balance) or to make periodic routine checks of the same. Thus, for example, for each transaction, the facilitation agent 44 may be enabled to check the account balance of the vendor. Alternatively or additionally, the facilitation agent 44 may make routine checks or snapshot looks at the account balance. For example, a check may be made every day at a certain time, every two or three days, or at other standard or random intervals. The account status of the vendor bank may be used by the facilitation agent 44 in facilitating payment transactions, as described in greater detail below.

The issuing bank may have an agreement or relationship with the entity associated with the facilitation agent 44 that enables the facilitation agent 44 to engage the issuing bank to extend funds to a merchant or vendor in response to instruction from the facilitation agent 44 when instant credit has been approved, and the customer uses the instant credit to make a repurchase. The facilitation agent 44 may therefore coordinate communications and funds transferring between members or parties of the return facilitation platform 10 to facilitate payment transactions that can be settled in ways described herein. The communication and activities that are involved or ensue thereafter will be described in greater detail below.

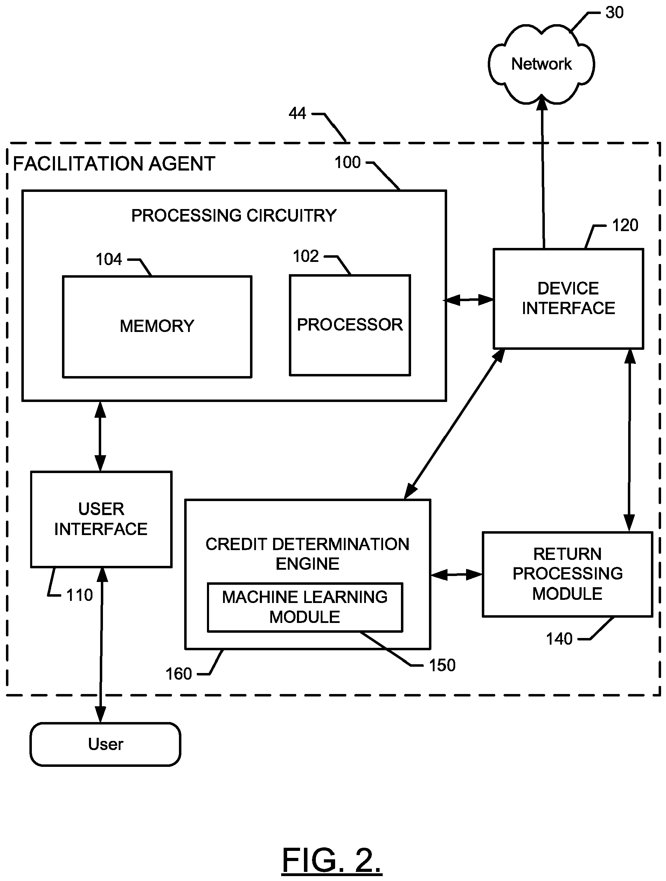

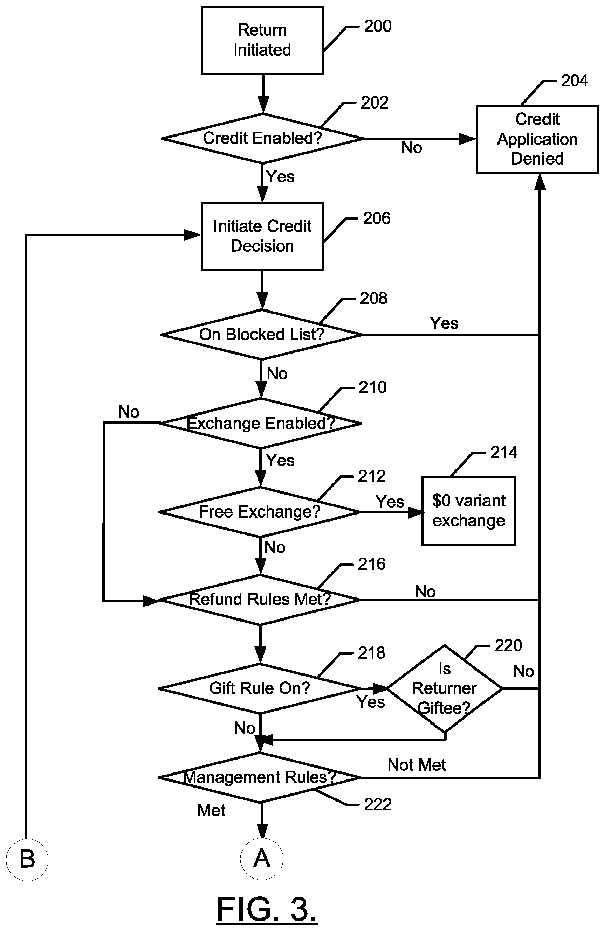

Regardless of how the transactions are initiated, the return facilitation platform 10 of FIG. 1 may be used before, during and after the time of the transaction in order to enable the facilitation agent 44 to set up the vendor and/or customer account, make determinations necessary to initiate the transactions (i.e., credit advances) responsive to requests for the same, or at periodic intervals, and coordinate settlement of funds associated with the return and repurchase activities that form the basis of transactions at the appropriate time. Each of these activities may have its own respective timing and communications that are facilitated by the facilitation agent 44 and FIGS. 3-5 illustrate example control flows associated with each respective scenario. However, prior to examining each respective scenario, the structures associated with an apparatus at which the facilitation agent 44 of an example embodiment may be instantiated will be described in reference to FIG. 2.

FIG. 2 shows certain elements of an apparatus for provision of the facilitation agent 44 or other processing circuitry according to an example embodiment. The apparatus of FIG. 2 may be employed, for example, as the facilitation agent 44 itself operating at, for example, a network device, server, proxy, or the like (e.g., the application server 40 of FIG. 1)). Alternatively, embodiments may be employed on a combination of devices (e.g., in distributed fashion on a device (e.g., a computer) or a variety of other devices/computers that are networked together). Accordingly, some embodiments of the present invention may be embodied wholly at a single device (e.g., the application server 40) or by devices in a client/server relationship (e.g., the application server 40 and one or more clients 20). Thus, although FIG. 2 illustrates the facilitation agent 44 as including the components shown, it should be appreciated that some of the components may be distributed and not centrally located in some cases. Furthermore, it should be noted that the devices or elements described below may not be mandatory and thus some may be omitted or replaced with others in certain embodiments.

Referring now to FIG. 2, an apparatus for provision of tools, services and/or the like for facilitating an exchange for information and services associated therewith in the financial industry is provided. The apparatus may be an embodiment of the facilitation agent 44 or a device of the return facilitation platform 10 hosting the facilitation agent 44. As such, configuration of the apparatus as described herein may transform the apparatus into the facilitation agent 44. In an example embodiment, the apparatus may include or otherwise be in communication with processing circuitry 100 that is configured to perform data processing, application execution and other processing and management services according to an example embodiment of the present invention. In one embodiment, the processing circuitry 100 may include a storage device (e.g., memory 104) and a processor 102 that may be in communication with or otherwise control a user interface 110 and a device interface 120. As such, the processing circuitry 100 may be embodied as a circuit chip (e.g., an integrated circuit chip) configured (e.g., with hardware, software or a combination of hardware and software) to perform operations described herein. However, in some embodiments, the processing circuitry 100 may be embodied as a portion of a server, computer, laptop, workstation or even one of various mobile computing devices. In situations where the processing circuitry 100 is embodied as a server or at a remotely located computing device, the user interface 110 may be disposed at another device (e.g., at a computer terminal) that may be in communication with the processing circuitry 110 via the device interface 120 and/or a network (e.g., network 30).

The user interface 110 may be in communication with the processing circuitry 100 to receive an indication of a user input at the user interface 110 and/or to provide an audible, visual, mechanical or other output to the user. As such, the user interface 110 may include, for example, a keyboard, a mouse, a joystick, a display, a touch screen, a microphone, a speaker, augmented/virtual reality device, or other input/output mechanisms. In embodiments where the apparatus is embodied at a server or other network entity, the user interface 110 may be limited or even eliminated in some cases. Alternatively, as indicated above, the user interface 110 may be remotely located.

The device interface 120 may include one or more interface mechanisms for enabling communication with other devices and/or networks. In some cases, the device interface 120 may be any means such as a device or circuitry embodied in either hardware, software, or a combination of hardware and software that is configured to receive and/or transmit data from/to a network (e.g., network 30) and/or any other device or module in communication with the processing circuitry 100. In this regard, the device interface 120 may include, for example, an antenna (or multiple antennas) and supporting hardware and/or software for enabling communications with a wireless communication network and/or a communication modem or other hardware/software for supporting communication via cable, digital subscriber line (DSL), universal serial bus (USB), Ethernet or other methods. In situations where the device interface 120 communicates with a network, the network 30 may be any of various examples of wireless or wired communication networks such as, for example, data networks like a Local Area Network (LAN), a Metropolitan Area Network (MAN), and/or a Wide Area Network (WAN), such as the Internet, as described above.

In an example embodiment, the memory 104 may include one or more non-transitory storage or memory devices such as, for example, volatile and/or non-volatile memory that may be either fixed or removable. The memory 104 may be configured to store information, data, applications, instructions or the like for enabling the apparatus to carry out various functions in accordance with example embodiments of the present invention. For example, the memory 104 could be configured to buffer input data for processing by the processor 102. Additionally or alternatively, the memory 104 could be configured to store instructions for execution by the processor 102. As yet another alternative, the memory 104 may include one of a plurality of databases (e.g., database server 42) that may store a variety of files, contents or data sets. Among the contents of the memory 104, applications (e.g., a service application configured to interface with the client application 22) may be stored for execution by the processor 102 in order to carry out the functionality associated with each respective application.

The processor 102 may be embodied in a number of different ways. For example, the processor 102 may be embodied as various processing means such as a microprocessor or other processing element, a coprocessor, a controller or various other computing or processing devices including integrated circuits such as, for example, an ASIC (application specific integrated circuit), an FPGA (field programmable gate array), a hardware accelerator, or the like. In an example embodiment, the processor 102 may be configured to execute instructions stored in the memory 104 or otherwise accessible to the processor 102. As such, whether configured by hardware or software methods, or by a combination thereof, the processor 102 may represent an entity (e.g., physically embodied in circuitry) capable of performing operations according to embodiments of the present invention while configured accordingly. Thus, for example, when the processor 102 is embodied as an ASIC, FPGA or the like, the processor 102 may be specifically configured hardware for conducting the operations described herein. Alternatively, as another example, when the processor 102 is embodied as an executor of software instructions, the instructions may specifically configure the processor 102 to perform the operations described herein.

In an example embodiment, the processor 102 (or the processing circuitry 100) may be embodied as, include or otherwise control the facilitation agent 44, which may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 as described below.

The facilitation agent 44 may be configured to include tools to facilitate the creation of customer/vendor accounts (and a corresponding customer/vendor profile), and the coordination of communication and fund transfers to support the operations of the return facilitation platform 10 as described herein. The tools may be provided in the form of various modules that may be instantiated by configuration of the processing circuitry 100. FIG. 2 illustrates some examples of modules that may be included in the facilitation agent 44 and that may be individually configured to perform one or more of the individual tasks or functions generally attributable to the facilitation agent 44 according to an example embodiment. However, the facilitation agent 44 need not necessarily be modular. In cases where the facilitation agent 44 employs modules, the modules may, for example, be configured to perform the tasks and functions described herein. In some embodiments, the facilitation agent 44 and/or any modules comprising the facilitation agent 44 may be any means such as a device or circuitry operating in accordance with software or otherwise embodied in hardware or a combination of hardware and software (e.g., processor 102 operating under software control, the processor 102 embodied as an ASIC or FPGA specifically configured to perform the operations described herein, or a combination thereof) thereby configuring the device or circuitry to perform the corresponding functions of the facilitation agent 44 and/or any modules thereof, as described herein.

As shown in FIG. 2, the facilitation agent 44 may include return processing module 140, a machine learning module 150 and a credit determination engine 160. In an example embodiment, the return processing module 140 may be configured to handle processing of a return by enabling the customer (e.g., via the client 20) to identify the product being returned and initiate the return process. The return processing module 140 may therefore include APIs and interfaces associated with management of the return process including identification of the customer (and customer account or bank), identification of the product being returned (i.e., the returned product), and any other transaction details that may enable the identity of the returned product, customer, vendor, or the like to be unambiguously identified. When the granting of credit occurs, the return processing module 140 may integrate with the machine learning module 150 and the credit determination engine 160 to manage the provision of an instant credit, and the spending of such credit by the customer in a repurchase event. However, no funds need necessarily be transferred initially. Instead, the facilitator (when the facilitation agent 44 approves a customer for instant credit) is merely providing a temporary credit to the customer and transferring funds to the merchant to cover the cost or value of the repurchase. When the returned item is received by the vendor, the vendor may then pay the facilitator (instead of sending such money to the customer). If the item is never returned, the facilitator never gets repaid. In other words, the facilitator only gets the value of the returned product when the product is returned. When the customer conducts the repurchase, the facilitator covers the cost with the vendor (perhaps modified by a service fee), and then the facilitator is made whole when the product is actually returned. To drive repurchase sales, and forgo complexities and communications associated with issuing a credit, voucher or refund when the product is physically returned, the facilitator evaluates whether there is a likelihood of return on the product that makes accepting the risk of no return worth taking.

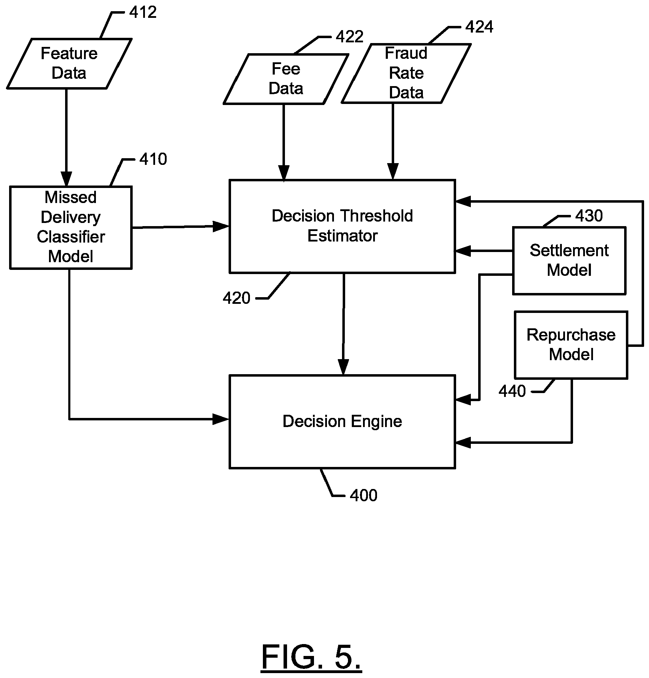

The machine learning module 150 may include trained models that are also updateable during operation for further learning and modification. Via the trained models, the machine learning module 150 may be configured to perform credit modeling and decision making as described herein. The machine learning module 150 may utilize the models and current information provided thereto in order to make a credit extension decision that is used by the credit determination engine 160 as described herein. Further details regarding the structure and operation of the machine learning module 150 are explained in greater detail below in reference to FIG. 5.

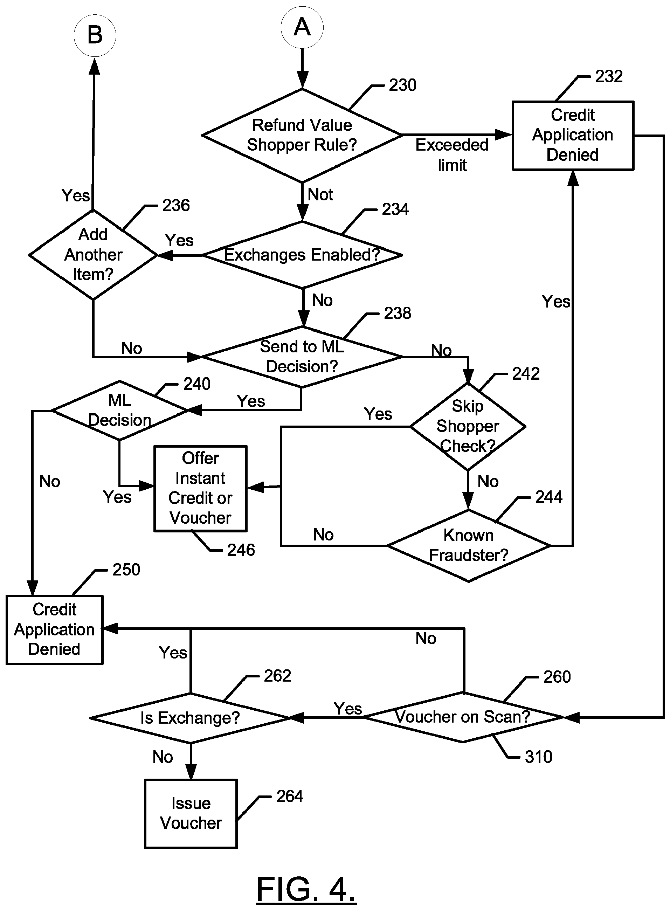

The credit determination engine 160 is configured with a plurality of rules that may be employed prior to and after operation of the machine learning module 150 to arrive at a final credit extension offer, and to drive interfaces with the user with respect to receipt credit and spending of the credit. Operation of the machine learning module 150 and the credit determination engine 160 in accordance with an example embodiment is described below in reference to FIGS. 3 and 4.

FIG. 3 illustrates a block diagram of a process flow for a product return using the machine learning module 150 and the credit determination engine 160 in accordance with an example embodiment. FIG. 3 includes continuation points A and B, which are also shown in FIG. 4, which is a continuation of the process flow shown in FIG. 3. Referring to FIGS. 3 and 4, a return may be initiated at operation 200 for a returned product. The returned product may have been purchased by the customer at the vendor (or merchant) and the return may be initiated in connection with setup or identification of the vendor, the transaction, the customer, and any other needed information.

At operation 202, a determination may first be made as to whether the provision of credit (or instant credit) is enabled either for this customer, or this vendor. If not, flow may proceed to operation 204, where no credit is extended, and a conventional product return may be initiated. The conventional product return may be understood to be a return via which the vendor only provides credit or funds to the customer after the returned product is received physically after the return. If provision of credit is enabled at operation 202, then initiation of a credit decision (i.e., operation of the credit determination engine 160) may begin at operation 206. The credit decision may include a number of programmable tests or rules that may be employed, and some examples are shown in FIG. 3.

In this regard, for example, a first rule or test may determine whether the customer or vendor is on the blocked list of entities or individuals for which no credit is to be offered at operation 208. The blocked list may be generated based on past behavior, or based on external information. In some cases, the vendor (or each vendor when multiple vendors are supported by the platform) may supply a list of customers who are to be blocked based on past exchanges (e.g., failing to actually return the product after initiating a return). In any case, if blocked, flow may proceed again to operation 204. If not blocked, flow may continue to operation 210 at which point a determination may be made as to whether a product exchange is permitted. If permitted, a subsequent determination may be made at operation 212 as to whether the exchange can be made free of charge. If yes, then a zero cost exchange may be processed at operation 214. If not, then flow may continue to operation 216, which is also where flow proceeds from a negative result of the determination at operation 210. Alternatively, all exchanges may ship for free in some cases, or other specific shipping cost handling paradigms may be employed.

Operation 216 may include determining if refund rules are met, and may include one or more specific refund rules. The refund rules can include a refund value merchant rule that denies credit for a merchant when the amount of issued credit for the merchant is higher than a predetermined cap. Additionally or alternatively, the refund rules can include a refund value overall rule that denies all credit applications when the amount of total issued credit has exceeded a global cap. Another possible refund rule may be a return of repurchase rule that denies credit applications when the customer is returning an item that was already previously purchased on credit offered through the platform 10. The return of repurchase rule may prevent certain fraud scheme by avoiding giving any credit for returns of repurchases. Otherwise, fraudsters could compound return credit inappropriately.

Although not required, some embodiments may also employ a gift rule at operation 218. If employed, a determination may be made as to whether the returner is the recipient of the gift at operation 220. If not, then flow proceeds to operation 204. If the returner is the recipient of the gift, or the gift rule is not on, then flow may proceed to operation 222 at which various management rules may be applied. Example management rules may include a merchant credit demand management rule or an overall credit demand management rule. The merchant credit demand management rule may be related to the refund value merchant rule but apply when the amount of issued credit is below the cap, but over 80% of the cap. This rule may randomly deny some applications to slow the advance to the cap. The overall credit demand management rule may operate similarly with respect to the refund value overall rule. In either case, if the management rules are not met, then flow may proceed to operation 204. If the management rules are met, then flow may proceed to continuation point A on FIG. 4.

As shown in FIG. 4, a refund value shopper rule may be applied at operation 230. The refund value shopper rule may deny all credit applications when the amount of total issued credit has gone over the cap for a particular customer (i.e., shopper). This way, overexposure of a single shopper can be avoided. In some cases, a default limit may be set at $2000 or another suitable value. Notably, the refund value shopper rule can be bypassed in some cases. If the limit is exceeded, the credit application may be denied at operation 232. If not, an exchange enabled determination may be made at operation 234. If exchanges are enabled, then a determination may be made as to whether additional items are to be added at operation 236. If so, flow proceeds to continuation point B and goes back to operation 206 on FIG. 3 for the additional item. If not, or if exchanges are not enabled, then flow proceeds to a decision block aimed at deciding whether to send the case to the machine learning module for a decision at operation 238. If yes, then flow may proceed to operation 240, where the machine learning module makes a decision. If not, then a shopper check may occur at operation 242. If the shopper check is not skipped, a determination may be made at operation 244 as to whether the customer is a known fraudster. If yes, then flow proceeds to operation 232. If not, or if the shopper check of operation 242 is skipped, then flow proceeds to operation 246 at which point an offer of instant credit is provided (or a voucher). Notably, a positive machine learning module decision at operation 240 also causes flow to proceed to operation 246.

If the machine learning module decision is instead negative at operation 240, flow proceeds to operation 250 at which point credit is denied. Notably, if credit was denied via operation 232, flow may proceed to operation 260 where a voucher may be presented on scan. Issuing a voucher on scan means that the credit is not immediately issued, but instead issued when a returned item is dropped off (and scanned) at the post office or shipping agent. The fact of the scan ensures that the product is enroute for return, and therefore can reduce any associated missed delivery risk. If the voucher does not relate to an exchange at operation 262, then a new voucher may be issued at operation 264. However, if there is no voucher or scan at operation 260, or if the voucher relates to an exchange, then flow may instead proceed to operation 250.

The flow of FIGS. 3 and 4 incorporates operation of both the machine learning module 150 (which performs operation 240) and the credit determination module 160 (which performs the remaining operations. FIG. 5 illustrates a schematic block diagram of operation of the machine learning module 150 in accordance with an example embodiment. As shown in FIG. 5, the machine learning module 150 may include a decision engine 400 that is configured to make the credit extension decision based on all inputs provided thereto. The inputs may include an input from a missed delivery classifier model 410. The missed delivery classifier model 410 may be a model built to determine a probability of a missed delivery that can be provided to the decision engine 400. In an example embodiment, feature data 412 may be used to train the missed delivery classifier model 410 based on data associated with product returns for each individual merchant (or for merchants in a particular area or business space). Outputs (i.e., model predictions) of the missed delivery classifier model 410 may also be provided to a decision threshold estimator 420. The decision threshold estimator 420 may be configured to determine target acceptance rates and decision thresholds for probability of a missed delivery. In some cases, the decision thresholds may be used to generate credit decisions and may compare missed delivery probability to a threshold. The threshold may be merchant specific in some cases. Notably, probability of a missed delivery is the opposite of a likelihood of return rating, and either factor may be used interchangeably. The only difference being that a threshold for likelihood of return is exceeded for a positive result, and a threshold for probability of missed delivery should be below the threshold for a positive result.

The decision threshold estimator 420 may also receive inputs including fee data 422 and fraud rate data 424 for a given merchant. Other inputs may include a settlement model 430 output and a repurchase model 440 output. The settlement model 430 may model an expected time to settlement for a return (i.e., product returned or not, and funds transferred between parties as appropriate). The repurchase model 440 may incorporate expected upsell and any commissions on the same into the model for determining when to extend credit. The decision engine 400 receives all the inputs noted above, and makes the credit decision accordingly (for operation 420 of FIG. 4). Thus, the decision engine 400 effectively determines if it is statistically sustainable to offer or extend the instant credit to the customer with a sufficient likelihood that the product will in fact be physically returned, at which point the vendor/merchant will transfer funds to the facilitator. Whereas up until that time, the facilitator has extended credit to the customer as instant credit, and the instant credit could be spent by the customer with the facilitator incurring the risk of not being repaid for the credit spent on a repurchase if the product is not returned.

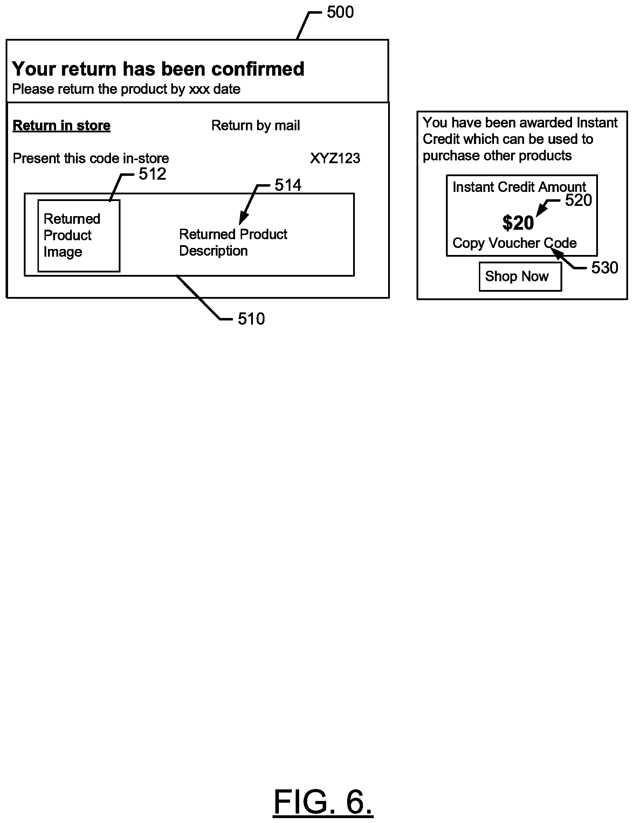

FIG. 6 illustrates a sample interface page that may be employed in connection with operation of the facilitation agent 44 (and the return processing module 140) in accordance with an example embodiment. In this regard, FIG. 6 shows a return console 500, which may be used to initiate a product return as described above. The return console 500 identifies a returned product 510 (e.g., via returned product image 512 and returned product description 514). The return console 500 also confirms the methodology of the return (e.g., in-store or by mail), and any other information needed to complete the return process.

Once the return is confirmed, an instant credit 520 may be awarded based on the price of the returned product 510 by operation of the facilitation agent 44 as described above. The instant credit 520 may be provided back to the customer via the original payment method if selected by the customer. However, if the customer instead requests a voucher 530, the corresponding credit may be used to immediately shop for other products (e.g., via the full catalog of products of the merchant, or via the recommended products generated by the facilitation agent 44) and pay using the voucher 530. In other words, in some examples, the voucher 530 may be electronically provided for redemption during an online shopping experience, or to initiate an online shopping experience. In some embodiments, the customer may select a "shop now" or other icon that enables continued or immediate shopping with the same merchant or other merchants at which the voucher 530 may be redeemed. The selection of the option to shop may direct the customer to the storefront site of the merchant (or another participating merchant that will accept the voucher 530) to enable the customer to utilize the voucher 530. The voucher 530 may therefore be visually or graphically displayed for both information purposes, and as a means to conduct a repurchase. Thus, for example, during the shopping experience on the merchant's web site, a control console or icon may be presented to illustrate an amount or value of the voucher 530. Moreover, the combined value of multiple vouchers (if multiple are attributed to the customer) or a listing of available vouchers (if more than one is available, but not combined) may also or alternatively be presented in some cases. The combination of vouchers or presentation of multiple vouchers may effectively create a wallet of credit including multiple vouchers from which the customer may sequentially draw, or a combined voucher from which the customer may draw, in order to continue to shop immediately. If the customer adds items to a cart or list of items to be purchased, the value of the items in the cart (or list) may be deducted from the value of the voucher 530 (or vouchers) to show a balance remaining to be spent. If the value of the voucher 530 is exceeded, the customer may add other payment methods to cover any difference. If the value of the voucher 530 (or vouchers) is not exceeded, remaining credit may be displayed, and the customer may select which voucher to utilize first, or be informed of a necessary order of usage, if applicable. By making it easy to see the value of the voucher 530 (or vouchers), or value that remains of the same, the customer may be shown the immediate shopping power that is obtained by utilizing the return facilitation platform 10, and the customer may be more likely to immediately engage in a repurchase that will benefit the merchant and the customer. Thus, a clear win-win scenario is created by the technical solution offered by example embodiments.

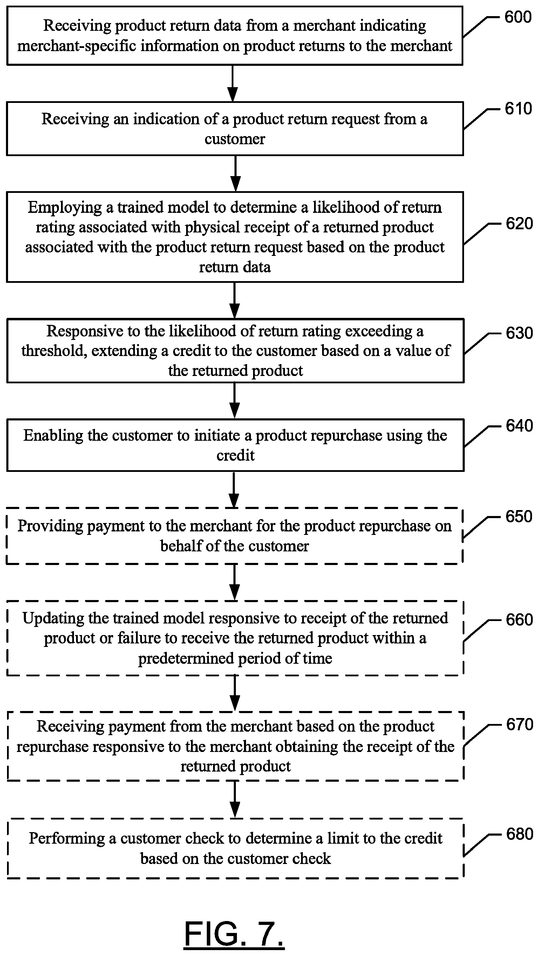

From a technical perspective, the return facilitation platform 10, and more particularly the facilitation agent 44, described above may be used to support some or all of the operations described above. As such, the apparatus described in FIG. 2 may be used to facilitate the implementation of several computer program and/or network communication based interactions. As an example, FIG. 7 is a flowchart of a method and program product according to an example embodiment of the invention. It will be understood that each block of the flowchart, and combinations of blocks in the flowchart, may be implemented by various means, such as hardware, firmware, processor, circuitry and/or other device associated with execution of software including one or more computer program instructions. For example, one or more of the procedures described above may be embodied by computer program instructions. In this regard, the computer program instructions which embody the procedures described above may be stored by a memory device of a user terminal (e.g., client 20, application server 40, and/or the like) and executed by a processor in the user terminal. As will be appreciated, any such computer program instructions may be loaded onto a computer or other programmable apparatus (e.g., hardware) to produce a machine, such that the instructions which execute on the computer or other programmable apparatus create means for implementing the functions specified in the flowchart block(s). These computer program instructions may also be stored in a computer-readable memory that may direct a computer or other programmable apparatus to function in a particular manner, such that the instructions stored in the computer-readable memory produce an article of manufacture which implements the functions specified in the flowchart block(s). The computer program instructions may also be loaded onto a computer or other programmable apparatus to cause a series of operations to be performed on the computer or other programmable apparatus to produce a computer-implemented process such that the instructions which execute on the computer or other programmable apparatus implement the functions specified in the flowchart block(s).

Accordingly, blocks of the flowchart support combinations of means for performing the specified functions and combinations of operations for performing the specified functions. It will also be understood that one or more blocks of the flowchart, and combinations of blocks in the flowchart, can be implemented by special purpose hardware-based computer systems which perform the specified functions, or combinations of special purpose hardware and computer instructions.

In this regard, a method of facilitating a product return transaction according to an example embodiment is shown in FIG. 7. The method may include receiving product return data from a merchant indicating merchant-specific information on product returns to the merchant at operation 600 and receiving an indication of a product return request from a customer at operation 610. The method may further include employing a trained model to determine a likelihood of return rating associated with physical receipt of a returned product associated with the product return request based on the product return data at operation 620, responsive to the likelihood of return rating exceeding a threshold, extending a credit to the customer based on a value of the returned product at operation 630, and enabling the customer to initiate a product repurchase using the credit at operation 640.

In some embodiments, the method (and a corresponding apparatus or system configured to perform the operations of the method) may include (or be configured to perform) additional components/modules, optional operations, and/or the components/operations described above may be modified or augmented. Some examples of modifications, optional operations and augmentations are described below, and optional operations are shown in dashed lines. It should be appreciated that the modifications, optional operations and augmentations may each be added alone, or they may be added cumulatively in any desirable combination. In this regard, for example, the method may further include providing payment to the merchant for the product repurchase on behalf of the customer at operation 650. In an example embodiment, the method may further include updating the trained model responsive to receipt of the returned product or failure to receive the returned product within a predetermined period of time at operation 660. In some cases, the method may further include receiving payment from the merchant based on the product repurchase responsive to the merchant obtaining the receipt of the returned product at operation 670. In an example embodiment, providing the payment to the merchant does not establish any responsibility for the customer to pay a party facilitating the product return transaction, and only establishes a responsibility for the merchant to pay the party in response to the merchant obtaining the physical receipt of the returned product. In some cases, the merchant-specific information may include merchant fraud rate information and/or a probability of missed delivery. In an example embodiment, the method may further include performing a customer check to determine a limit to the credit based on the customer check at operation 680. In some cases, the likelihood of return rating further may include an upsell expectation value and/or an expected time to settlement.

In an example embodiment, an apparatus for performing the method of FIG. 7 above may comprise a processor (e.g., the processor 102) or processing circuitry configured to perform some or each of the operations (600-680) described above. The processor may, for example, be configured to perform the operations (600-680) by performing hardware implemented logical functions, executing stored instructions, or executing algorithms for performing each of the operations. In some embodiments, the processor or processing circuitry may be further configured for additional operations or optional modifications to operations 600 to 680.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe exemplary embodiments in the context of certain exemplary combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. In cases where advantages, benefits or solutions to problems are described herein, it should be appreciated that such advantages, benefits and/or solutions may be applicable to some example embodiments, but not necessarily all example embodiments. Thus, any advantages, benefits or solutions described herein should not be thought of as being critical, required or essential to all embodiments or to that which is claimed herein. Although specific terms are employed herein, they are used in a generic and descriptive sense only and not for purposes of limitation.

## Claims

1. A method of facilitating a product return transaction, the method comprising:
receiving product return data from a merchant indicating merchant-specific information on product returns to the merchant;
receiving an indication of a product return request from a customer;
employing a trained model to determine a likelihood of return rating associated with physical receipt of a returned product associated with the product return request based on the product return data;
responsive to the likelihood of return rating exceeding a threshold, extending a credit to the customer based on a value of the returned product; and
enabling the customer to initiate a product repurchase using the credit.

2. The method of claim 1, further comprising providing payment to the merchant for the product repurchase on behalf of the customer.

3. The method of claim 2, further comprising updating the trained model responsive to receipt of the returned product or failure to receive the returned product within a predetermined period of time.

4. The method of claim 3, further comprising receiving payment from the merchant based on the product repurchase responsive to the merchant obtaining the receipt of the returned product.

5. The method of claim 2, wherein providing the payment to the merchant does not establish any responsibility for the customer to pay a party facilitating the product return transaction, and only establishes a responsibility for the merchant to pay the party in response to the merchant obtaining the physical receipt of the returned product.

6. The method of any preceding claim, wherein the merchant-specific information includes merchant fraud rate information.

7. The method of any preceding claim, wherein the merchant-specific information includes a probability of missed delivery.

8. The method of any preceding claim, further comprising performing a customer check to determine a limit to the credit based on the customer check.

9. The method of any preceding claim, wherein the likelihood of return rating further includes an upsell expectation value.

10. The method of any preceding claim, wherein the likelihood of return rating further includes an expected time to settlement.

11. An apparatus for facilitating a product return transaction, the apparatus comprising processing circuitry configured to perform the method of any of claims 1-10.
